# EUROPEAN PATENT APPLICATION

(11) **EP 4 726 326 A1**
(43) Date of publication of application: **15.04.2026**
(21) Application number: 25207797.9
(22) Date of filing: 09.10.2025
(51) Int. Cl.: G01C 15/00, G01C 25/00

(54) **LASER AND LASER RECEIVER**

(30) Priority: 11.10.2024 US 202463706274 P; 18.11.2024 US 202463721740 P
(71) Applicant: Stanley Black & Decker Inc., New Britain, CT 06053 (US)
(72) Inventor: QIN, Fugen, Lutherville-Timonium, 21093 (US); AGARWAL, Akash, Baltimore, 21231 (US); SCHMITTDIEL, Michael C., Baltimore, 21231 (US); BEERS, David, New Britain, 06053 (US)
(74) Representative: SBD IPAdmin

(57) **Abstract**

A laser level system includes a laser level configured to project a laser beam, and a laser detector configured to detect the laser beam projected by the laser level. The laser detector includes at least one array of photo detectors configured to detect the laser beam. The laser level and laser detector are configured to wirelessly communicate. The laser level and the laser detector are configured to selectively operate in a beam find mode. The laser level is configured to perform sweeps in the beam find mode to locate the laser beam on the at least one array of photo detectors.

## Description

The present application relates to a laser level and a laser receiver or detector for a construction tool such as a construction laser level.

A laser level used in construction may project a laser beam. For example, a rotary laser level may project a laser beam and rotate the laser beam about an angle, such as 360 degrees. At significant distances from the laser level it may be difficult for a user to see the laser, and a user may desire to detect a location of the laser beam. Accordingly, a user may use a laser receiver, which may also be referred to as a laser detector. The laser receiver may detect the presence of a laser beam and provide an indication to a user.

A first aspect of the present invention provides a laser level system according to Claim 1 of the appended claims.

Preferred, and other optional, features of the invention are defined and described in the dependent claims.

It is to be understood that any feature, including any preferred or other optional feature, of any aspect, embodiment or example herein, may be a feature, including a preferred or other optional feature, of any other aspect, embodiment or example.

According to an aspect of an example embodiment, a laser level system, includes a laser level configured to project a laser beam; and a laser detector configured to detect the laser beam projected by the laser level; wherein the laser detector comprises at least one array of photo detectors configured to detect the laser beam; wherein the laser level and laser detector are configured to wirelessly communicate; wherein the laser level and the laser detector are configured to selectively operate in a beam find mode; and wherein the laser level is configured to perform sweeps in the beam find mode to locate the laser beam on the at least one array of photo detectors.

The sweeps may comprise a first sweep of a first angle and a second sweep of a second angle.

The second angle may be greater than the first angle.

The first angle may be at least 1 degree.

The second angle may be at least 3 degrees.

When the laser level is placed in an upright position on a flat horizontal surface, the laser level may be configured to project the laser beam in a horizontal plane; the first sweep may be in one of a vertical up direction or a vertical down direction; and the second sweep may be in the other of the vertical up direction and the vertical down direction.

The wireless communication may be performed via a wireless protocol including Coded PHY.

According to an aspect of an example embodiment, a laser level system includes a laser level configured to project a laser beam; and a laser detector configured to detect the laser beam projected by the laser level. The laser detector may include an array of photo detectors configured to detect the laser beam. The laser level and laser detector are configured to wirelessly communicate. The laser level and the laser detector are configured to selectively operate in a beam find mode. The beam find mode may include a beam find procedure and a center find procedure. In the beam find procedure, the laser level and the laser detector cooperate to determine whether the laser beam is directed onto the array of photo detectors or cause the laser beam to be directed onto the array of photo detectors if the laser beam is not directed onto the array of photo detectors. In the center find procedure, the laser level and the laser detector cooperate to direct the beam to a center of the array of photo detectors.

In the beam find procedure the laser level may be configured to perform sweeps to locate the laser beam on array of photo detectors.

The sweeps may include a first sweep in a first direction and a second sweep in a second direction opposite the first direction.

The first sweep may include a sweep across a first angle; and the second sweep may include a second sweep across a second angle.

The first angle may be at least one degree.

The second angle may be at least three degrees.

The center find procedure may begin after it is determined that the laser beam is directed onto the array of photo detectors.

In the center find procedure, the laser level may sweep the laser beam in a direction towards a center of the array of photo detectors.

In the center find procedure, the laser level may decrease a speed of rotation of the laser beam when it is determined that the laser beam passes the center point.

In the center find procedure, when the laser beam is detected as being within a threshold of the center point, the laser level may move the laser beam closer towards the center point in a step function.

The threshold may be in a range of 1 millimeters to 10 millimeters.

The wireless communication may be performed via a wireless protocol including Coded PHY.

According to an aspect of an example embodiment, a method of laser beam finding in a beam finding system, the system comprising a laser level configured to project a laser beam and a laser detector configured to detect the laser beam projected by the laser level, wherein the laser detector comprises an array of photo detectors configured to detect the laser beam and the laser level and laser detector are configured to wirelessly communicate, the method comprising: projecting, from the laser level, a laser beam towards the laser detector; detecting at the laser detector whether the laser beam is projected onto the array of photo detectors; wherein, if the laser beam is not detected at the laser detector, sweeping the laser beam until the laser beam is detected by the laser detector as being projected onto the array of photo detectors; and centering the laser beam onto a center of the array of photo detectors once the laser beam is detected by the laser detector as being projected onto the array of photo detectors.

The sweeping of the laser beam may include sweeping the laser beam in a first direction and then a second direction opposite the first direction.

Sweeping the laser beam in the first direction may include sweeping the laser beam a first angular amount.

Sweeping the laser beam in the second direction may include sweeping the laser beam a second angular amount.

The second angular amount may be greater than the first angular amount.

The first angular amount may be at least one degree.

The second angular amount may be at least three degrees.

The laser level and the laser detector may be configured to selectively operate in a beam find mode.

The beam find mode may include a beam find procedure and a center find procedure.

In the beam find procedure, the laser level and the laser detector may cooperate to determine whether the laser beam is directed onto the array of photo detectors or cause the laser beam to be directed onto the array of photo detectors if the laser beam is not directed onto the array of photo detectors.

In the center find procedure, the laser level and the laser detector may cooperate to direct the beam to a center of the array of photo detectors.

In the beam find procedure the laser level may be configured to perform sweeps to locate the laser beam on array of photo detectors.

The sweeps may include a first sweep in a first direction and a second sweep in a second direction opposite the first direction.

The first sweep may include a sweep across a first angle and the second sweep may include a second sweep across a second angle.

The first angle may be at least one degree.

The second angle may be at least three degrees.

The center find procedure may begin after it is determined that the laser beam is directed onto the array of photo detectors.

In the center find procedure, the laser level may sweep the laser beam in a direction towards a center of the array of photo detectors.

In the center find procedure, the laser level may decrease a speed of rotation of the laser beam when it is determined that the laser beam passes the center point.

In center find procedure, when the laser beam is detected as being within a threshold of the center point, the laser level may move the laser beam closer towards the center point in a step function.

The threshold may be in a range of from 1 millimeters to 10 millimeters.

According to an aspect of an example embodiment, a laser level system includes a laser level configured to project a laser beam and a laser detector configured to detect the laser beam projected by the laser level.

The laser detector may include arrays of photo detectors including a front array of photo detectors and a rear array of photo detectors.

The laser level and laser detector may be configured to wirelessly communicate.

The laser level and the laser detector are configured to selectively operate in a beam find mode in which the laser level and the laser detector cooperate to determine whether the laser beam is directed onto one of the arrays of photo detectors or cause the laser beam to be directed onto one of the arrays of photo detectors if the laser beam is not directed onto one of the arrays of photo detectors.

In at least a portion of the beam find mode, only one of the front array of photo detectors and the rear array of photo detectors may be operable at a time to determine whether the laser beam is directed onto one of the arrays of photo detectors.

The wireless communication may be performed via a wireless protocol including Coded PHY.

According to an aspect, an example embodiment of a laser level system includes a construction laser level and a remote control. The remote control is configured to wirelessly communicate with the construction laser level to control at least one operation of the construction laser level. The wireless communication may be performed via a wireless protocol including Coded PHY.

The construction laser level may be a rotary laser level configured to project a laser beam.

The at least one operation may include controlling a scan angle of the laser beam.

The at least one operation may include controlling a rotational speed of the laser beam.

The at least one operation may include controlling an automatic or manual slope of the rotary laser level.

The at least one operation may include a beamfind operation.

The construction laser level may be configured to project a first laser line and a second laser line transverse to the first laser line.

The at least one operation may include turning on and off the first laser line.

The at least one operation may include turning on and off the second laser line.

The wireless communication may be configured to be performed at distances of at least 800 meters.

The construction laser level may be a 3x360 laser level.

The at least one operation may include rotating the construction laser level about a vertical axis.

Various aspects and features of example embodiments may be combined or substituted as possible.
Fig. 1 is a perspective view of a rotary laser level according to an example embodiment;
Fig. 2 is a front view of a laser detector according to an example embodiment;
Fig. 3 is a rear view of a laser detector according to an example embodiment;
Fig. 4 is a front view of an exemplary embodiment of a circuit board and assembly for a laser detector according to an example embodiment;
Fig. 5 is a schematic electronic diagram according to an example embodiment;
Fig. 6 illustrates an example embodiment of a laser level system according to an example embodiment;
Fig. 7 illustrates a laser beam sweep procedure according to an example embodiment;
Fig. 8 illustrates a front view of a laser detector according to an example embodiment;
Fig. 9 illustrates an explanatory PHY transmission diagram;
Fig. 10 illustrates an explanatory PHY transmission diagram;
Fig. 11 illustrates an example embodiment of a laser level assembly;
Fig. 12 illustrates an example embodiment of a remote control; and
Fig. 13 illustrates an example embodiment of a laser level pendulum.

The drawings are for the purpose of illustration and description only and are not intended as a definition of the limits of the invention. In addition, it should be appreciated that structural features shown or described in any one embodiment herein can be used in other embodiments as well. As used in the specification and in the claims, the singular form of "a", "an", and "the" include plural referents unless the context clearly dictates otherwise.

All closed-ended (e.g., between A and B) and open-ended (greater than C) ranges of values disclosed herein explicitly include all ranges that fall within or nest within such ranges. For example, a disclosed range of 1-10 is understood as also disclosing, among other ranged, 2-10, 1-9, 3-9, etc.

As used herein, the terminology "at least one of A, B and C" and "at least one of A, B or C" each mean any one of A, B or C or any combination of A, B and C. For example, at least one of A, B and C may include only A, only B, only C, A and B, A and C, B and C, or A, B and C.

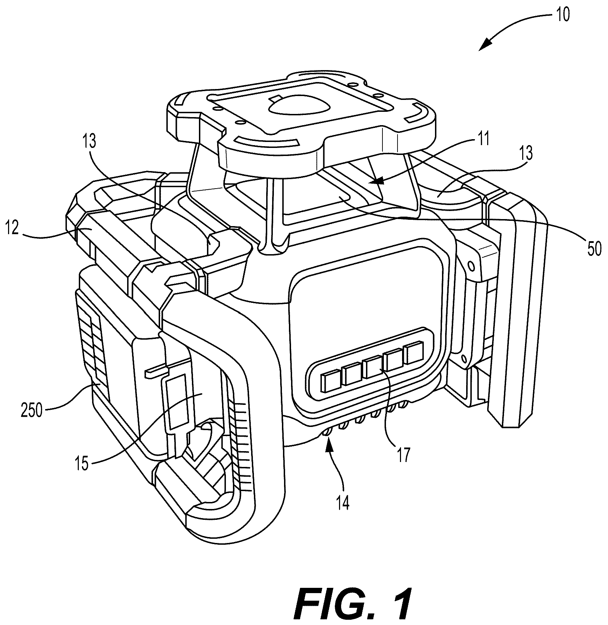

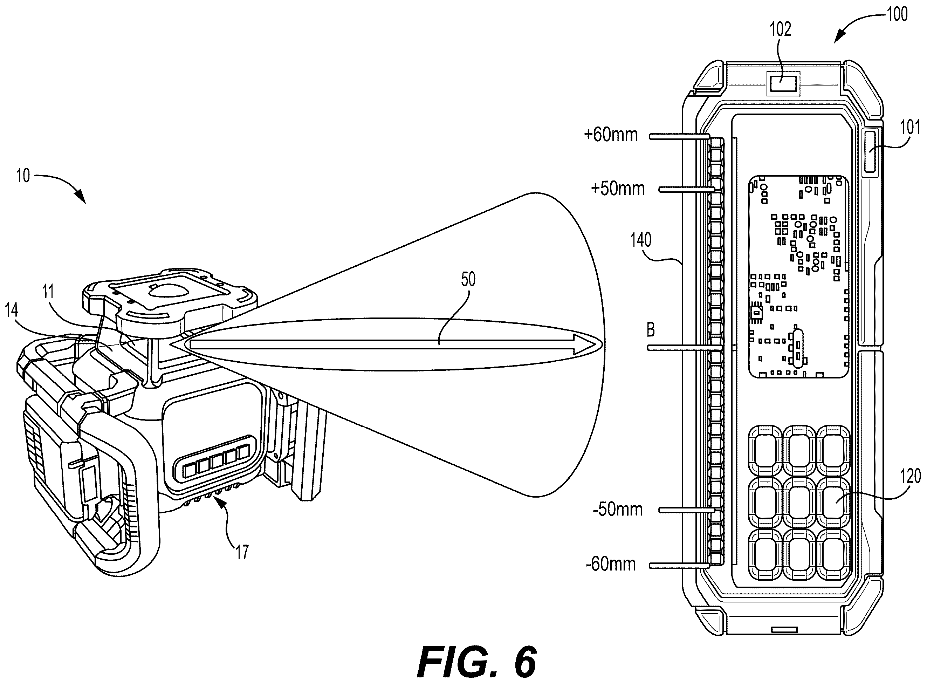

Fig. 1 illustrates a perspective view of a non-limiting, exemplary embodiment of a rotary laser level 10. The rotary laser level 10 includes a projector 11 which projects a laser beam 50 (FIG. 6). The laser beam 50 is rotated about an axis, such as 360 degrees about a vertical axis such that the laser beam 50 is projected along a horizontal plane so as to indicate a horizontal plane. In some instances, the laser beam 50 can be projected about a smaller scanning angle rather than 360 degrees. Also, an angle of the laser beam 50 with respect to the horizontal plane may be changed. For example, the laser beam 50 may be tilted at an angle with respect to a horizontal plane.

As shown in Fig. 1 the rotary laser level 10 includes a base housing 14. The base housing 14 may include a battery receiving portion 15. The battery receiving portion 15 of the example embodiment receives a removable battery pack 250 for providing power to at least some parts of the rotary laser level 10, such as one or more motors and one or more laser generator. The laser generator may be a laser diode. The removable battery pack 250 may be a power tool battery pack that is configured to selectively power one or more power tools such as a drill, sander, or saw, in addition to the rotary laser level 10. A rotary laser engine may be housed in the base housing 14 and be configured to project a laser beam through the windows of the projector 11.

As shown, the rotary laser level 10 includes a protective structure 12. The protective structure 12 is connected to the base housing 14 with connecting portions 13. The base housing 14 may be made of a hard plastic material and the protective structure 12 may include a shock absorbing material.

The rotary laser level 10 is shown in a perspective view in Fig. 1 in a generally upright position 10. In the upright position, the protective structure 12 may contact a flat horizontal surface, the projector 11 may be above the base housing 14, and the laser level 10 may project the laser beam 50 about a horizontal plane. When in the upright position, the rotary laser level 10 may project laser beam 50 in a horizontal plane or at a specified angle relative to a horizontal plane. Also, when in the upright position, the battery pack 250 may be disposed sideways between two flanges of the protective structure 12. In the example embodiment, the rotary laser level 10 may be placed on its side and project the laser beam 50 along a vertical plane or at a specified angle relative to the vertical plane.

The rotary laser level 10 may include a control panel 17 on a side of the base housing 14. The control panel 17 may include buttons or other user operated input devices. The control panel 17 may be used for turning on and off the laser, increasing or decreasing the speed of rotation of the laser, entering a beam find function, or controlling other functions of the laser level 10 or a laser detector 100 to which it is wirelessly communicating. Various components may be housed in the base housing 14. For example, one or more printed circuit boards may be in the base housing 14 and a wireless transceiver, a controller and a variety of sensors such as one or more accelerometer may be on the printed circuit board or boards. In the example embodiment, the wireless transceiver in the base housing 14 cooperates with the wireless transceiver 230 of the laser detector 110 to allow for wireless communication between the rotary laser level 10 and the laser detector 110. Wireless communication may be conducted using one or more of a variety of wireless communication protocols such as, for example, a Bluetooth protocol, infrared (IR), Zigbee, Wi-Fi or other wireless communication methods.

In an example embodiment, wireless communication may include communication via a Bluetooth protocol. In an example embodiment, wireless communication may utilize Bluetooth coded PHY in order to provide longer range transmission.

The Bluetooth low energy (BLE) protocol may use one of three physical layers (PHY). The three PHY layers are 1M PHY (standard), 2M PHY (higher data rate) and coded PHY (longer range/lower data). In example embodiments, the various layers may be used in wireless transmission. The different PHY layers provide different physical properties of the wireless radio frequency (RF) signal.

In an example embodiment, the rotary laser level 10 and the laser receiver/laser detector 100 may communicate using Bluetooth communication and the Bluetooth communication may include use of coded PHY as the physical layer. In example embodiments, use of coded PHY may increase the range of wireless communication between the laser level 10 and the laser receiver 100 as compared to use of the 1M PHY (standard) or 2M PHY (high data rate).

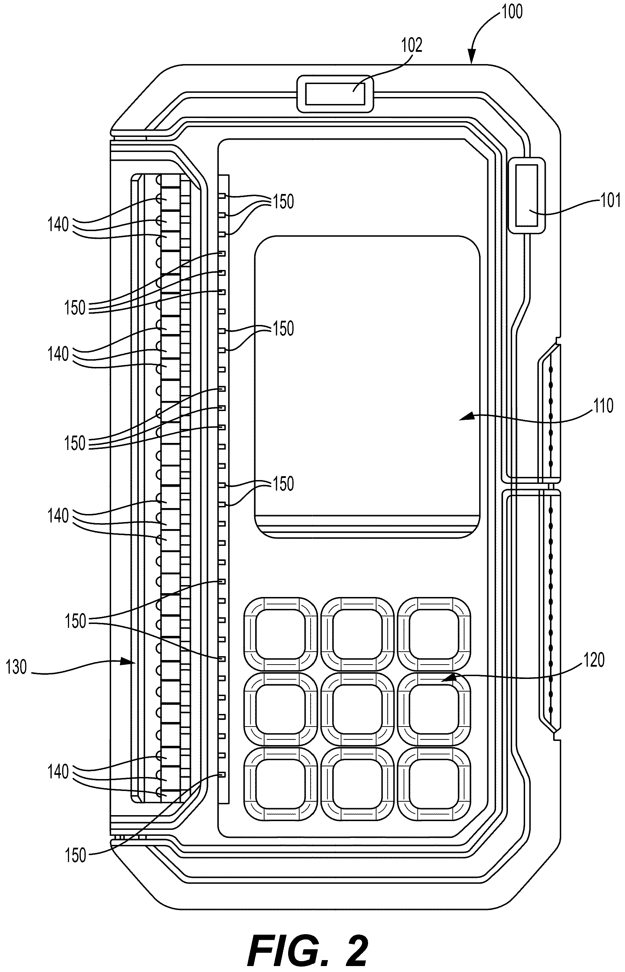

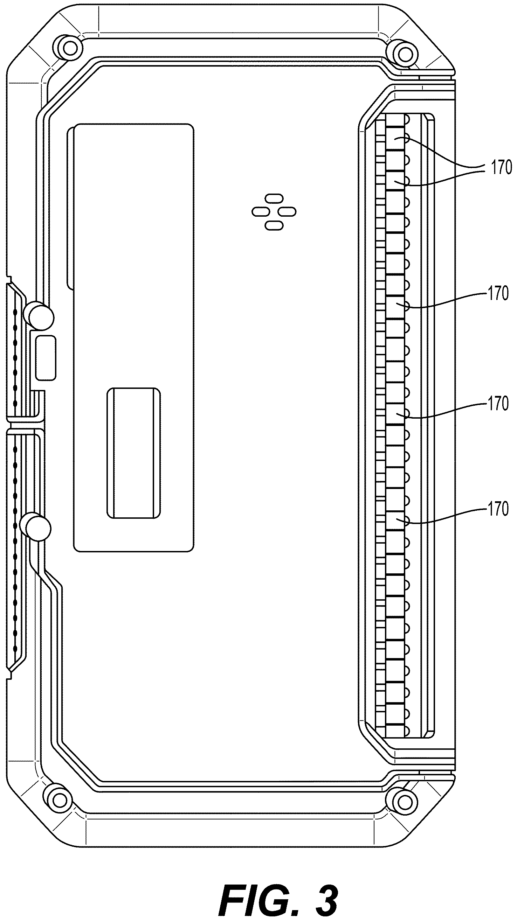

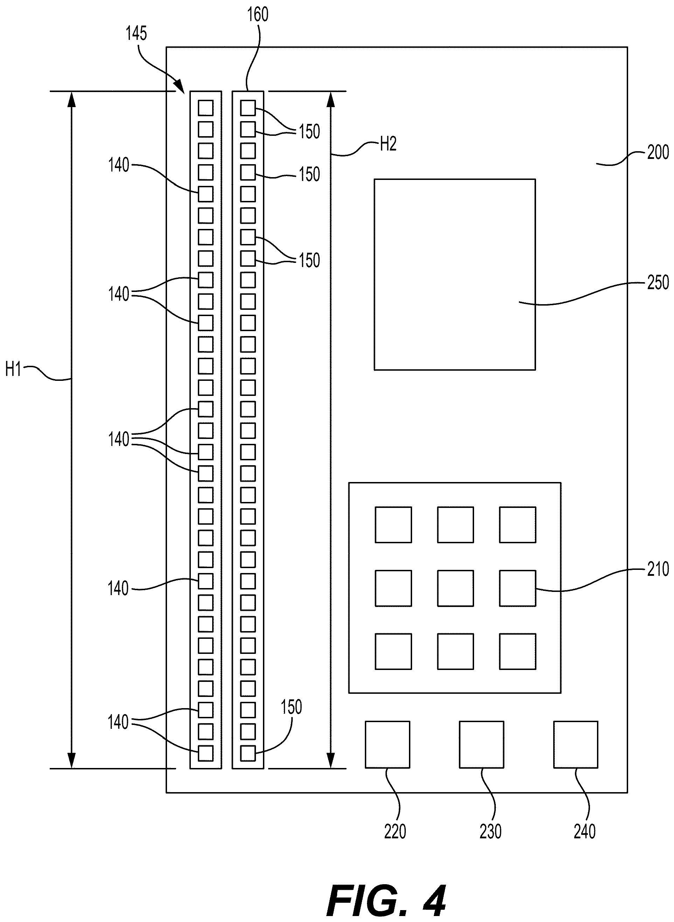

Fig. 2 illustrates a front view of an example embodiment of a laser detector 100 and Fig. 3 illustrates a rear view of the example embodiment of the laser detector 100. Fig. 4 is a front view of an example embodiment of a circuit board and assembly for a laser detector according to an example embodiment. As shown in Fig. 2, the laser detector 100 includes a first bubble level 101 and a second bubble level 102. The bubble levels 101 and 102 assist a user in positioning the laser detector 100. For example, a user may utilize the bubble levels 101 and 102 to position the laser detector 100 square with a top surface along a horizontal plane. The laser detector 100 includes a screen 110 and a key-pad 120 with a variety of input keys. The screen 110 can display various information regarding a laser level that the detector 100 is being used with, as well as information about the laser detector 100 itself. As shown in Fig. 2 the laser detector includes a window 130. The window 130 may be transparent or translucent. There is a front row of photo-detectors 140 aligned at a position behind the window 130. The photo-detectors 140 are arranged in a vertical row. In an example embodiment, the photo-detectors 140 may be photo-diodes. The photo-detectors 140 provide a detection section 145 with a height H1 as shown in Fig. 4. The detection section 145 may be the same as or generally correspond to the height of window 130. A vertical row of light emitting diodes (LEDs) 150 are arranged next to the window 130 and photo-detectors 140. The LEDs 150 provide an indication section 160 with a height H2.

The height H2 may be at least 80 mm; at least 85 mm; at least 90 mm; at least 95 mm; at least 100 mm; or at least 110 mm.

In an example embodiment, in operation the laser detector 100 may be associated with laser level 10. The laser detector 100 may be placed at some distance away from the laser level 10. The laser detector 100 may be, for example, manually held by a user, magnetically attached to a metal structure or attached to a grade rod. Laser beam 50 may project onto the laser detector 100. In particular, laser beam 50 may project onto window 130 at a particular vertical elevation. One or more photo-detectors 140 behind the window detect the laser beam 50. The photo-detectors 140 are connected to a controller 220 and the controller 220 determines a vertical location of the laser beam 50 based on signals from the photo-detectors 140. Then, one or more LED 150 may be illuminated to indicate a vertical position of the laser beam 50.

For example, in the example embodiment, the laser beam 50 may project onto the laser detector 100 at first position on the window 130, be detected by one or more photo-detectors 140 positioned at or near the first position, and then one or more LEDs 150 positioned at or near the first position may be illuminated to provide an indication of the vertical position of the laser beam 50. Similarly, the laser beam 50 may project onto the laser detector 100 at a higher vertical second position, be detected by one or more photo-detectors 140 positioned at or near the second position, and one or more LEDs 150 positioned at or near the second position may be illuminated to provide an indication of the vertical position of the laser beam 50 at the second position.

In the example embodiment, there are twenty-nine (29) front photo detectors 140. This allows for a precise determination of the location of the laser beam 50. In example embodiments, there may be at least 10 photo-detectors 140 and the indication section may be configured to detect at least 10 vertical locations; there may be at least 15 Photo-detectors 140 and the indication section may be configured to detect at least 15 vertical locations; there may be at least 20 photo-detectors 140 and the indication section may be configured to detect at least 20 vertical locations; there may be at least 22 Photo-detectors 140 and the indication section may be configured to detect at least 22 vertical locations; there may be at least 25 Photo-detectors 140 and the indication section may be configured to detect at least 25 vertical locations.

Fig. 3 illustrates a rear of the laser detector 100. As shown the example embodiment includes a second row of photo detectors 170 at a rear of the laser detector 100. The photo detectors 170 may detect a laser beam 50 on a rear of the laser detector 100. In an embodiment, a laser beam 50 detected on the rear by the photo detectors 170 may be displayed by the indication section 160 and/or there may be an additional indication section on the rear of the laser detector 100. The example embodiment may include a window 180 over the photo-detectors 170.

In an example embodiment, a circuit board 200 is mounted in the housing of the laser detector 100. Fig. 4 illustrates a circuit board and assembly including circuit board 200. The LEDs 150 and photo-detectors 140 are mounted on the circuit board 200. Additionally, as shown, switches 210 for the keypad 120 are mounted on the circuit board 200, as are a controller 220 and a wireless transceiver 230. The controller may include a microprocessor. Other electronic components may be mounted on the circuit board 200, such as various other sensors, such as an accelerometer. A speaker 240 may be mounted on the circuit board 200. In an embodiment, the user may depress a button on the laser level 10, 20 and the speaker 240 may make a sound, such as a beeping sound to allow a user to find the laser detector 100.

A display screen 250 for the display 110 may be mounted on the circuit board 200. Various information from a laser level 10, 20 or from the laser detector 100 may be displayed on the display screen 250. For example, a speed of rotation of a rotary laser level 10 may be displayed on the display screen 250. A battery state-of-charge for the laser detector 100 may be displayed on the display screen 250. The laser detector 100 may communicate to the laser level 10, 20 through the wireless transceiver 230.

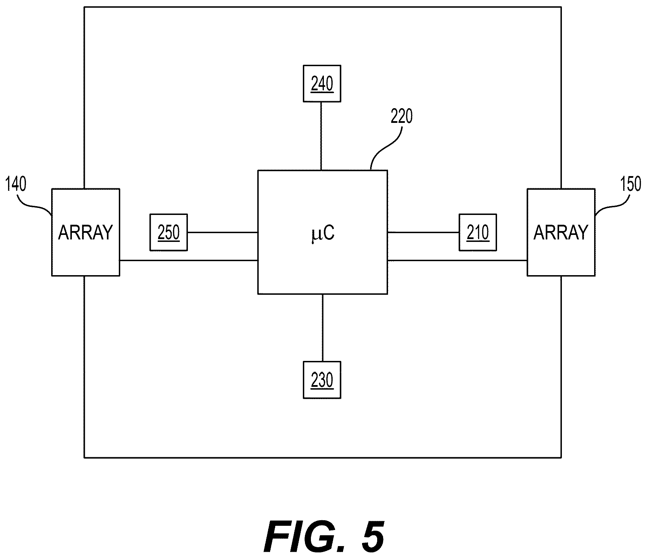

Fig. 5 is an exemplary schematic circuit diagram for the laser detector 100.

The rotary laser 10 and laser detector 100 may have a beam find function. In the beam find function, the rotary laser 10 and laser detector 100 cooperate to locate the beam on the laser detector 100 and then center the laser beam 50 on the laser detector 100.

The laser beam find function will be described with references to Figs. 6-8. The laser beam find function operates in two general stages. The first stage is a beam find mode or stage in which a beam find procedure is performed. During the beam find mode, the laser beam 50 moves to find the laser detector 100. The second stage is a center find mode or stage in which a center find procedure is performed. In the center find stage, the laser beam 50 is moved towards a center position on the laser detector 100. In this manner, the laser level 10 adjusts the angle of the laser beam 50 so that it is directed onto photo detectors 140/170 of the laser detector 100 and then is adjusted to hit a center of the array of photo detectors 140/170.

In using the laser beam find function, a user locates the laser detector 100 at a desired location. The laser detector 100 may be, for example, mounted on a grade rod or placed on a surface such as a ground surface or a table. A user may locate the rotary laser 10 to generally pass near the laser detector 100. At long distances, it may be more difficult for the user to see the laser beam 50.

For purposes of description, the example embodiment is discussed with respect to a situation in which the laser detector 100 is placed in a vertical orientation and the laser level 10 is placed on a flat horizontal surface with the projector 11 on top of the base housing 14 and at a top end of the laser level 10. The rotary laser level 10 then projects a beam 50 along a horizontal plane or at an angle with respect to the horizontal plane. The rotary laser level 10 and laser detector 100 may also be in other orientations. In particular, the rotary laser level 10 may be placed on its side on a flat horizontal surface such that a laser beam 50 is projected along a vertical plane or at an angle with respect to the vertical plane. The laser detector 100 may be placed horizontally so that the photo-diode arrays 140/170 extend horizontally.

The beam find function may be initiated by a user at either the rotary laser level 10 or the laser detector 100. The user may initiate the beam find function at the rotary laser level 10 using the control panel 17 or at the laser detector 100 using the key pad 120. The rotary laser level 10 may rotate at various speeds. For example, the rotary laser level 10 may rotate so that the beam 50 rotates about 360 degrees at a high speed of 1200 revolutions per minute (rpm); a medium of 600 rpm; a slow speed of 300 rpm; and a slowest speed of 150 rpm. Other levels and speeds of rotation may be used in other embodiments. For example, there may be more than four set rotational speed levels.

Upon starting the beam find function, the laser level system enters the beam find mode and the rotary laser level 10 speed of rotation is set to the high speed of 1200 rpm. Using the high speed allows for faster operation of beam finding. The high speed of example embodiments may be at least 800 rpm or at least 1000 rpm. The rotary laser level 10 then enters a tracking mode.

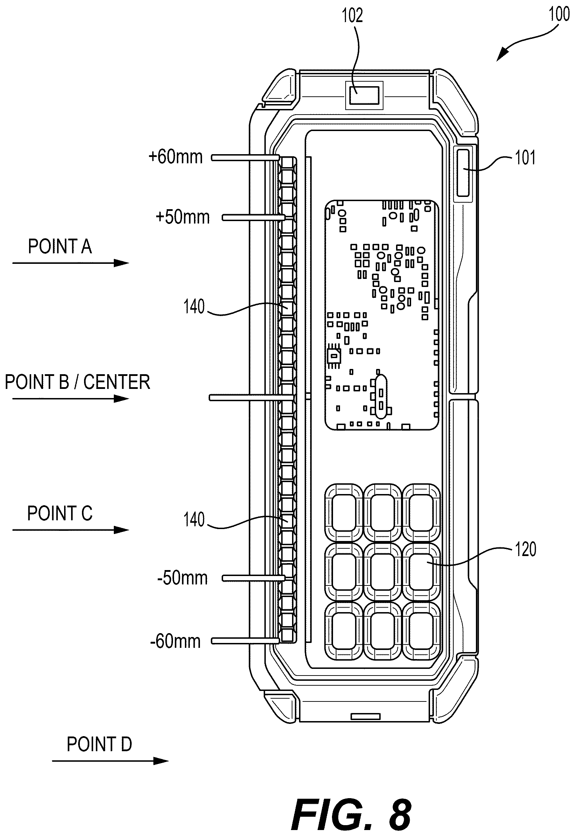

With reference to Figs. 6 and 8, a center of the front array of photo detectors 140 is at Point B (0x00). The top of the photo detectors 140 extends 60mm above the center to the point identified as +60mm. The bottom of the photo detectors 140 extend 60mm below the center Point B to the point identified as -60mm.

The laser detector 100 may be located at a position along or near the plane of the rotating laser beam 50. As the rotary laser level 10 rotates the laser beam 50 at the projector 11 around 360 degrees, the laser beam 50 sweeps at or near the laser detector 100. That is, for example, the laser beam 50 may be directed towards the laser detector 100 but above the highest photo detector 140/170 of either the front or rear photo detector arrays. With reference to Figs. 6 and 8, the laser beam may more than 60mm above the center Point B and so above the +60mm point. The laser beam 50 may be directed toward the laser detector 100, but below the bottom photo detector 140, such as at point D in Figs. 6 and 8. The laser beam 50 may be initially directed to an area on one of the photo detectors 140, but above or below the center point B. For example, the laser beam 50 may be directed to point A above the center point B or point C below the center point B. The laser beam could also be directed directly on the center point B. The example embodiment is described with respect to the front array of photo-detectors 140, however, the laser detector 100 may also be placed with its back facing the laser level 10 so that a beam contacts or is near a photo detector 170 facing the rear of the laser detector 100.

The beam find mode operates to locate the laser beam 50 on the laser detector 100 and, in particular, on a portion of either the front array of photo detectors 140 or the rear array of photo detectors 170.

As discussed above, a speed of rotation is initially set at a high speed (1200 rpm). The system is set to a tracking mode. In an embodiment, only the front array of photo detectors 140 or the rear array of photo detectors 170 are configured to be operable at a time to determine whether the laser beam is directed onto one of the arrays of photo detectors. That is, for example, a front array of photo detectors 140 may at first be operable to determine whether a laser beam is directed onto one of the arrays of photo detectors such that if the laser beam 50 is directed at the rear array of photo detectors 170 it is not detected. This may be done by, for example, having the controller 220 not check for or ignore any signal from the rear array of photo detectors 170.

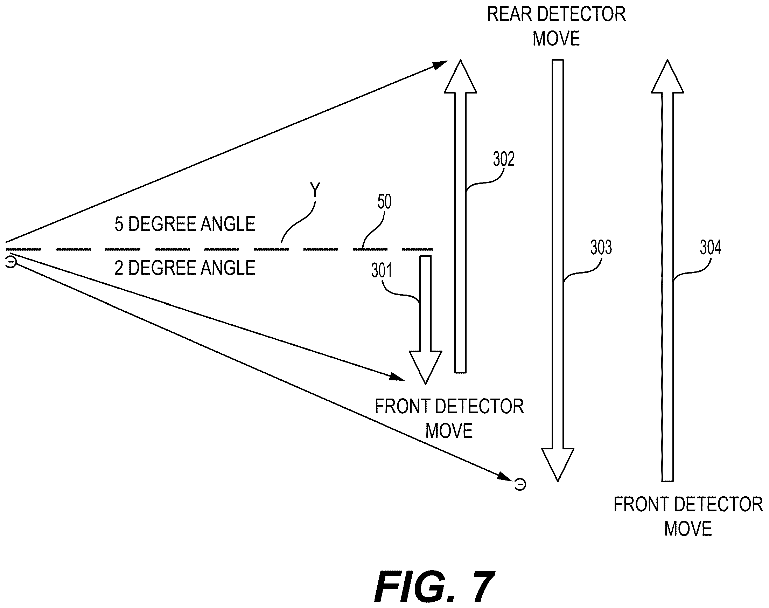

The laser level 10 initially starts in a beam find mode in which it performs sweeps to locate the laser beam 50 on the laser detector 100. As shown in Fig. 7, the first sweep 301 is down two degrees. During this first sweep 301 in the down direction, the laser beam 50 is rotated at the high speed 1200 rpm as discussed above and steadily directed downward up to two degrees. Accordingly, in a situation where the laser beam 50 initial starts above the photo detectors of the laser detector 100, the laser beam 50 may pass onto one of the photo detectors 140. If the laser beam 50 is detected as being on the photo detectors 140, then the laser level system moves to a center find mode to locate the laser beam 50 onto a center of the laser detector 100. Otherwise, the beam find mode continues.

If the beam find mode continues, the laser beam 50 makes a second sweep 302 in the upward direction. The second sweep 302 continues up to five degrees above the horizontal starting position. If at some point the laser beam 50 is detected, then the laser level system enters the center find mode. Otherwise, the beam find mode continues. As shown, a third sweep 303 takes the laser beam 50 from five degrees above the horizontal staring position Y to five degrees below the horizontal starting position Y. There may be a fourth sweep 304 that takes the laser beam from five degrees below the horizontal starting position Y to five degrees above or more. In example embodiments there may be additional sweeps and increasingly larger angles. In the example embodiment, once the last sweep is completed, such as the fourth sweep 304, if the laser beam 50 is not detected, the beam find mode may start over. In example embodiments, the user may be alerted that the laser beam 50 has not been found by the laser detector 100. A user may then, for example reposition the laser level 10 at a position more in line with the laser detector 100. The user may be alerted audibly or visibly at the laser level 10 or the laser level detector 100 or other device.

In the example embodiment, only the front array of photo detectors 140 are operable to determine whether a laser beam is directed onto one of the arrays of photo detectors in the first sweep 301, the second sweep 302 and the fourth sweep 304. Only the rear array of photo detectors 170 are operable to determine whether a laser beam is directed onto one of the arrays of photo detectors in the third sweep 303.

An angle of the second sweep may be larger than an angle of the first sweep. An angle of the third sweep may be larger than an angle of the second sweep. An angle of the first sweep may be at least one degree, such as one degree upward or downward in the vertical direction. An angle of the second sweep may be at least three degrees, such as at least three degrees in the upward or downward direction. The second sweep may be done in an opposite direction as the first sweep. For example, if the first sweep is in a downward direction, the second sweep may be in an upward direction. Conversely, if the first sweep is in an upward direction, the second sweep may be in a downward direction.

In another example embodiment, multiple arrays of photo detectors may be operable to detect the laser beam 50 at the same time. For example, in an example embodiment, both the front array of photo detectors 140 and the rear array of photo detectors 170 may be operable at the same time so that both are operable to detect the laser beam 50 during each of the first sweep 301, the second sweep 302, the third sweep 303 and the fourth sweep 304.

Once the laser beam 50 is detected in the beam find procedure, the laser level system enters a center find mode in which a center find procedure is conducted and in which the laser level 10 and the laser detector 100 cooperate to direct the beam 50 to a center of the array of photo detectors 140, 170.

As discussed above, when the laser beam 50 is detected and enters the center find procedure it may begin at the Point A, Point B or Point C. If the laser beam 50 is not on the center Point B, the laser beam 50 will begin to move towards the center Point B.

The laser beam 50 may not change directions immediately. For example, in the event the laser beam 50 starts at Point A and is moving downwardly towards the center Point B, the laser beam 50 may continue past center Point B such as to Point C or to Point D. That is, the laser beam 50 may overshoot the center Point B. When it is determined that the laser beam 50 has overshot the center point B, a speed of rotation of the laser beam 50 is reduced and the laser level causes the laser beam 50 to reverse directions and head back towards the center Point B. The speed of rotation reduction may be from the high speed of 1200 rpm to a medium speed of 600 rpm. This allows a reduction in the overshoot. If the laser beam passes back over the center Point B to a location above the center Point B, rotation of the laser beam 50 can then be reduced again to a slow speed of 300 rpm and the direction reversed again towards the center Point B. This may continue until the laser beam 50 is within a threshold amount of the center Point B. In the example embodiment, the threshold amount may be, for example, 5 mm. In example embodiments, the threshold may be 10 mm or less; or 5 mm or less. Once the laser beam 50 is within the threshold amount, the laser beam may be moved by step function. That is, instead of a sweep up or down, the laser beam 50 may be held steady and moved up or down towards the center point by step function. This center find procedure may allow the laser beam 50 to quickly be centered at the center Point B.

The example embodiment is described with respect to the front array 140 facing the laser level 10. The center find works similarly with the rear array 170.

Additionally, the system has been shown and described with respect to the laser level 10 being upright and projecting a beam in a horizontal plane or at an angle with respect to the horizontal plane. The laser level 10 may also be placed on its side to project a vertical plane and the beam 50 moved with respect to the vertical plane.

In an example embodiment, laser detector 100 may also serve as a remote for the rotary laser level 10 for the beam find function described above as well as other functions of the laser level 10. In an example embodiment, the laser detector 100 may provide for one or more of on/off control of the rotary laser level; a speed of rotation of the laser; a slope angle of the laser level; a height adjustment of the laser level; or for changing the laser level between manual and automatic leveling modes. For example, the laser detector 100 may be configured to allow a user to increase or decrease the speed of rotation of the laser beam 50 about an axis. The laser detector 100 may provide for control of a sweep angle of the laser beam 50. For example, a user may be able to input a sweep angle of 90 degrees so that the laser beam 50 sweeps back and forth across an angle of 90 degrees rather than 360 degrees. The sweep angle may be set at various angles such as 15 degrees, 30 degrees, 45 degrees or greater. The laser detector 100 may be configured to remotely control a slope for the laser beam 50. For example, a user may be able to control the rotary laser level 10 to a predefined grade such as 5 degrees for installation of, for example, a ramp, a sloped ceiling, or a staircase. In example embodiments, remote control of the laser level 10 via the laser detector may be performed via Bluetooth communication and including Coded PHY as described above.

In some example embodiments, there may be a separate remote control. The separate remote control may provide different, additional, or duplicative functions as the laser detector control 100.

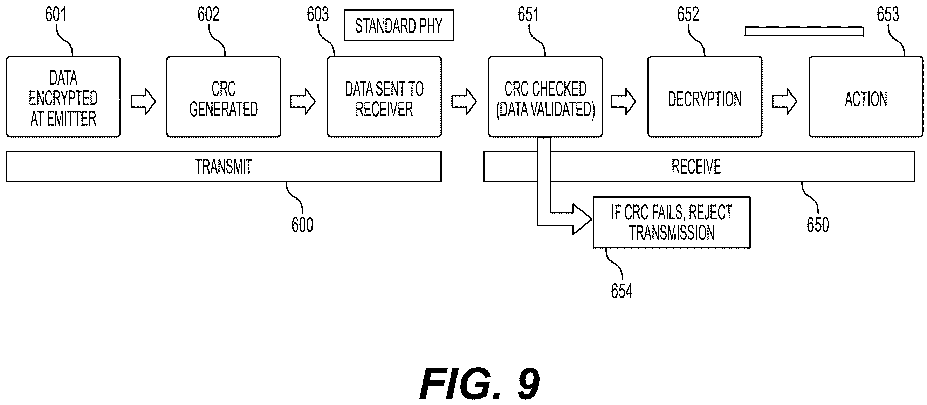

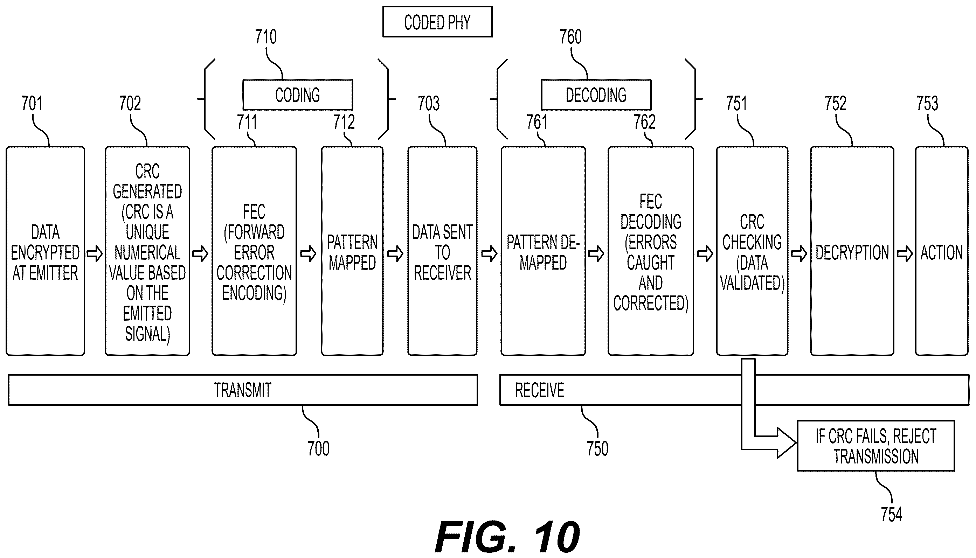

Fig. 9 illustrates an exemplary block diagram of Standard PHY (1M PHY) and Fig. 10 illustrates an exemplary block diagram of Coded PHY. As shown in Fig. 9, Standard PHY includes a transmit operation 600 and a receive operation 650. In the transmit operation, data is encrypted at step 601, a CRC is generated at step 602 and the data is sent to the receiver at 603. The CRC is a unique numerical value based on the emitted signal. In the receive operation 650, the CRC is checked at step 651 so that the data is validated. As shown, if the CRC checking step 651 fails so that the data is not validated, the transmission is rejected 654. If the checking step 651 is successful such that the data is validated, the data is decrypted at a decryption step 652 and then an action is taken 653. In this manner, the various remote control functions described above may be taken. For example, the laser receiver 100 can be used to change the scan angle of the laser beam 50 of the rotary laser level.

Fig. 10 illustrates an exemplary block diagram of Coded PHY. The Coded PHY operation is similar to the Standard PHY operation, but also includes a coding 710 and decoding 760. The additional coding 710 and decoding 760 steps increase the likelihood of a successful transmission. The additional coding 710 and decoding 760 steps reduce a data rate but improve signal accuracy and therefor increase range. This provide increase range and reliability if Coded PHY is used for remote control of the various features, including those described above or others.

As shown in Fig. 10, the Coded PHY includes a transmit operation 700 and a receive operation 750. In the transmit operation, data is encrypted at step 701, a CRC is generated at step 702 and the data is sent to the receiver at 703. In the Coded PHY shown in Fig. 10, there is also an additional Coding Step 710 between the CRC generation of step 702 and the data sending of step 703. As shown, the Coding operation 710 includes a Forward Error Correction (FEC) encoding step 711 and a Pattern Mapping step 712.

The receive operation 750 of Coded PHY is similar to that of Standard PHY, however, it also includes a Decoding Operation 760 that is necessary since the transmit operation 700 includes coding operation 710. In the Decoding operation 760, the pattern is de-mapped in step 761 and then the FEC is decoded in step 762 so that errors are caught and corrected. After the decoding 760, the receive operation 750 proceeds in a similar manner as the receive operation 650 so that the CRC is checked at step 751 so that the data is validated. As shown, if the CRC checking step 751 fails so that the data is not validated, the transmission is rejected 754. If the checking step 751 is successful such that the data is validated, the data is decrypted at a decryption step 752 and then an action is taken 753. In this manner, the various remote control functions described above may be taken. For example, the laser receiver 100 can be used to change the scan angle of the laser beam 50 of the rotary laser level.

In an example embodiment, the laser receiver 100 may act as a remote control for changing at least one of the scan angle, rotational speed, beam find or other operation of the rotary laser level 10 from a range of at least 500 meters (m); at least 600 meters; at least 700 meters; at least 800 meters; at least 900 meters; or at least 1,000 meters.

In some example embodiments, the rotary laser level 10 and the laser receiver 100 may be configured for asset tracking such as asset tracking as part of a tool system including various power tools. The asset tracking system may allow for tracking and inventorying the rotary laser level 10 and laser receiver 100. The rotary laser level 10 and laser receiver 100 may use a single wireless transceiver for asset tracking and remote communication with one another or may include a second wireless transceiver.

The rotary laser level 10 and laser level receiver 100 of the example embodiment may have a find remote feature. In an example embodiment, a button on the control panel 17 of the rotary laser level 10 may start operation of the find remote feature. A signal from the rotary laser level 10 is then sent out to the laser receiver 100. The laser receiver 100 produces a sound in response to receiving the signal so that a user may find the laser receiver 100.

In example embodiments, Bluetooth protocol communication with Coded PHY may be utilized with laser levels other than a rotary laser level. For example, a remote control may communicate with a line laser level or line and dot laser levels. The line laser level may be a laser level configured to project a pair of perpendicular lines, such as laser lines that may be leveled as a vertical line and a horizontal line. The line laser level may be, for example, a 3 x 360 laser level or a 2 x 360 laser level. In example embodiments, the line laser level may be controlled at least in some respects by a remote via Bluetooth protocol communication with Coded PHY. The control may include, for example, turning on and off the various laser lines and or dots of a line or line and dot laser level. The control may include increasing and decreasing the brightness of the laser level. In some embodiments, the laser level may be on a motorized bracket and the control may include operation of the motorized bracket to rotate the bracket and so the laser level or raise and lower the laser level.

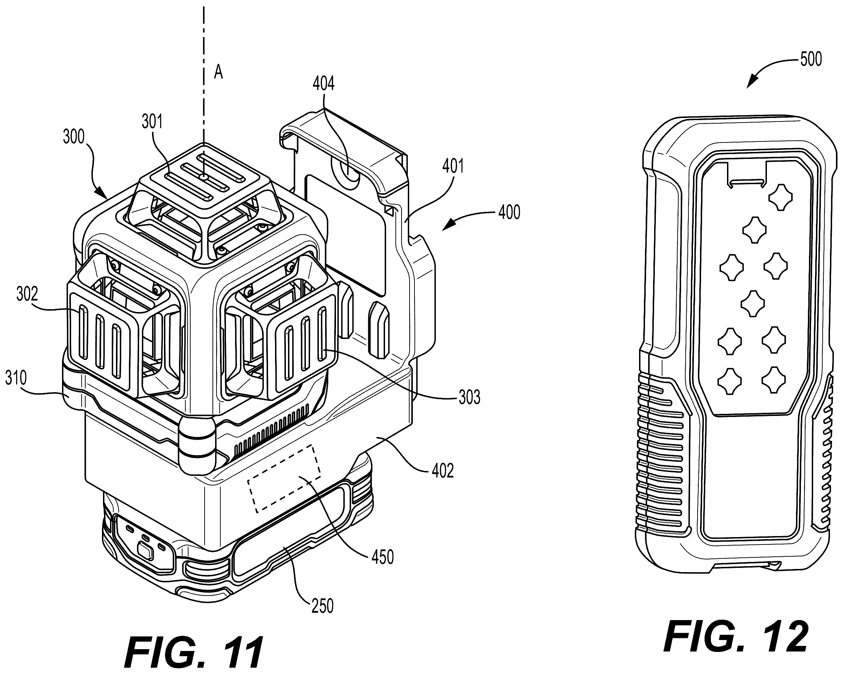

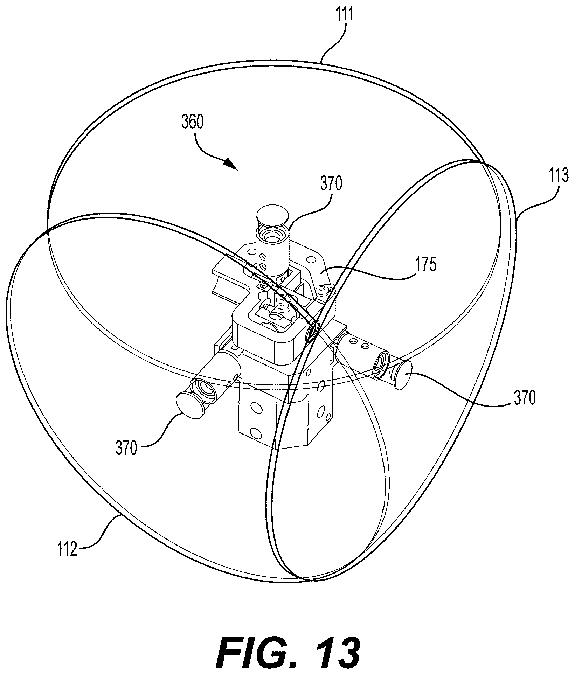

For example, Figs. 11-13 illustrate an example embodiment of a 3x360 line laser level 300 with a remote 500 that does not include a laser receiver structure or function. The remote 500 may be in addition to or instead of a laser receiver. Fig. 11 illustrates a perspective view of a non-limiting, exemplary embodiment of a laser level 300. As shown in Fig. 11, the laser level 300 includes three laser projectors 301, 302 and 303. The three laser projectors project three perpendicular laser beams 111, 112 and 113, shown in Fig. 13. The laser level 300 is configured so that when it is leveled it can produce two vertical laser beams and one horizontal laser beam.

Fig. 13 illustrates a laser module assembly 360 which produces the laser lines 111, 112 and 113 that project out of the three laser projectors 301, 302 and 303, respectively. The laser module assembly 360 is housed in the housing 310 of the laser level 300. The laser module assembly 360 includes three laser modules 370. The three laser modules 370 are carried on a pendulum assembly 175. Each laser module includes a laser generator such as a laser diode and a reflector such as a cone reflector. At least one lens, such as a collimator lens, may be positioned between the laser diode and the cone reflector. The laser diode may produce a laser beam, the laser beam may be collimated by the collimating lens, and the collimated laser beam is directed at or near an apex of the reflective cone. The laser cone reflects the laser beam into a laser line so that the respective laser beams produced by each of the laser diodes of the laser modules reflects off of the respective reflective cones to project laser lines 111, 112, and 113 at the three laser projectors 301, 302 and 303.

The pendulum assembly 175 rotates about a relatively small angle so that the laser modules 370 project beams in the horizontal and vertical planes when placed on a surface that is not entirely horizontally flat. For example, if the laser level 300 is placed on a surface that is sloped five degrees (5 degrees) with respect to horizontal, the pendulum assembly 175 will tilt under the influence of gravity so that the laser modules 370 are aligned to produce a laser line 111 in a horizontal plane and laser lines 112 and 113 in vertical planes. Additionally, in some embodiments the laser level 300 includes a locking device to lock the pendulum assembly 175. In those instances the pendulum assembly 175 will be locked in a particular position rather than allowed to rotate under the influence of gravity and it may produce laser lines offset from the vertical and horizontal.

The laser lines 111, 112, 113 project out from the laser level 300 onto walls, floors ceilings or other surfaces. As there are three beams which project in a circular pattern, the laser level 300 may be referred to as a 3x360 laser level.

The laser level 300 is mounted on an L-shaped bracket 400. The bracket 400 may have a mounting portion 401 which is configured to be mounted on a surface, such as a vertical surface. The mounting portion includes a key hole 404. The mounting portion 401 may also include magnets on a rear side thereof to allow for magnetic mounting of the bracket 400 and so the laser level 300 on the laser bracket. When the bracket 400 is attached to a vertical wall at the mounting portion 401, the laser level 300 produces two vertical laser lines and one horizontal laser line. Similarly, when the laser level assembly is placed on a flat horizontal surface, the laser level 300 produces two vertical laser lines and one horizontal laser line. In some instances, the laser level 300 may be considered to be located at a front and the mounting portion 401 at a back or rear.

The bracket 400 also includes a base portion 402. The laser level 300 is rotatably mounted on the base portion 402 of the bracket 400. The laser level 300 may rotate about a vertical axis A that is parallel to a vertical wall, beam or metal surface to which the mounting portion 401 of the bracket 400 may be mounted and generally perpendicular to the base portion 402. In some embodiments, the laser level 300 may be removably mounted to the bracket 400 so that the laser level 300 is configured such that a user may remove and replace the laser level 300 on the bracket 400. The base portion 402 is configured to slidably receive a removable power tool battery pack 250. The battery pack 250 is configured to power the laser level 300 and may also configure any powered components housed in the bracket 400. In some embodiments, the bracket 400 may include a motor 450 that is internal to the housing of the bracket 400 so that the laser level 300 may be rotated about axis A by the motor via the remote control 500. A circuit board may be housed in the bracket 400 and a wireless receiver, transmitter or transceiver, a controller, and other electronic components may be mounted on the circuit board. The wireless receiver or transceiver may receive signals from the remote control 500 and the control may control operation of the motor 450.

As discussed above, in example embodiments, the line laser level 300 of the example embodiment may be controlled at least in some respects by a remote via Bluetooth protocol communication with Coded PHY. The control may include, for example, turning on and off the various laser lines 111, 112 and 113 either collectively or individually. The control may include increasing and decreasing the brightness of the laser lines 111, 112, 113 again, either individually or collectively. The control may include controlling rotation of the laser level 300 about vertical axis A via the motor 450.

Although described by way of exemplary embodiments, it is understood that the words which have been used herein are words of description, rather than words of limitation. Although the description provided above provides detail for the purpose of illustration based on what is currently considered to be the most practical and preferred embodiments, it is to be understood that such detail is solely for that purpose and that the disclosure is not limited to the expressly disclosed embodiments, but, on the contrary, is intended to cover modifications and equivalent arrangements that are within the scope of the appended claims.

It is to be understood that the present disclosure contemplates that, to the extent possible, one or more features of any embodiment can be combined or exchanged with one or more features of any other embodiment.

## Claims

1. A laser level system, comprising:
a laser level configured to project a laser beam; and
a laser detector configured to detect the laser beam projected by the laser level;
wherein the laser detector comprises an array of photo detectors configured to detect the laser beam;
wherein the laser level and the laser detector are configured to wirelessly communicate with each other;
wherein the laser level and the laser detector are configured to selectively operate in a beam find mode;
wherein the beam find mode comprises a beam find procedure and a center find procedure;
wherein, in the beam find procedure, the laser level and the laser detector cooperate with each other to determine whether the laser beam is directed onto the array of photo detectors, and to cause the laser beam to be directed onto the array of photo detectors if the laser beam is not directed onto the array of photo detectors; and
wherein, in the center find procedure, the laser level and the laser detector cooperate with each other to direct the beam to a center of the array of photo detectors.

2. A laser level system according to Claim 1, wherein, in the beam find procedure the laser level is configured to perform sweeps to locate the laser beam on the array of photo detectors.

3. A laser level system according to Claim 2, wherein the sweeps comprise a first sweep in a first direction and a second sweep in a second direction opposite to the first direction.

4. A laser level system according to Claim 3, wherein, when the laser level is placed in an upright position on a flat horizontal surface, the laser level is configured to project the laser beam in a horizontal plane; wherein the first sweep is in one of a vertical up direction or a vertical down direction; and wherein the second sweep is in the other of the vertical up direction and the vertical down direction.

5. A laser level system according to Claim 3 or Claim 4, wherein the first sweep comprises a sweep across a first angle, and the second sweep comprises a sweep across a second angle.

6. A laser level system according to Claim 5, wherein the second angle is greater than the first angle.

7. A laser level system according to Claim 5 or Claim 6, wherein the first angle is at least one degree and/or wherein the second angle is at least three degrees.

8. A laser level system according to any preceding claim, configured such that the center find procedure begins after it is determined that the laser beam is directed onto the array of photo detectors.

9. A laser level system according to any preceding claim, wherein, in the center find procedure, the laser level sweeps the laser beam in a direction towards a center of the array of photo detectors.

10. A laser level system according to any preceding claim, wherein, in the center find procedure, the laser level decreases a speed of rotation of the laser beam when it is determined that the laser beam passes a center of the array of photo detectors.

11. A laser level system according to any preceding claim, wherein, in the center find procedure, when the laser beam is detected as being within a threshold distance from a center of the array of photo detectors, the laser level moves the laser beam closer towards the center of the array of photo detectors, preferably in a step function.

12. A laser level system according to Claim 11, wherein the threshold distance is in a range of from 1 millimeter to 10 millimeters.

13. A method of laser beam finding in a laser level system, the system comprising a laser level configured to project a laser beam and a laser detector configured to detect the laser beam projected by the laser level, wherein the laser detector comprises an array of photo detectors configured to detect the laser beam, and the laser level and the laser detector are configured to wirelessly communicate with each other, the method comprising:
projecting, from the laser level, a laser beam towards the laser detector;
detecting at the laser detector whether the laser beam is projected onto the array of photo detectors;
if the laser beam is not detected at the laser detector, sweeping the laser beam until the laser beam is detected by the laser detector as being projected onto the array of photo detectors; and
centering the laser beam onto a center of the array of photo detectors once the laser beam is detected by the laser detector as being projected onto the array of photo detectors.

14. A method according to Claim 13, wherein the sweeping the laser beam comprises sweeping the laser beam in a first direction and then a second direction opposite to the first direction.

15. A method according to Claim 14, wherein sweeping the laser beam in the first direction comprises sweeping the laser beam a first angular amount, and sweeping the laser beam in the second direction comprises sweeping the laser beam a second angular amount.
